# EUROPÄISCHE PATENTANMELDUNG

(11) **EP 0 989 321 A2**
(43) Veröffentlichungstag der Anmeldung: **29.03.2000**
(21) Anmeldenummer: 99115108.5
(22) Anmeldetag: 09.08.1999
(51) Int. Cl.: F16D 65/12

(54) **Bremsscheibe für Scheibenbremsen**

(30) Priorität: 22.09.1998 DE 19843399
(71) Anmelder: Volkswagen Aktiengesellschaft, 38436 Wolfsburg (DE)
(72) Erfinder: Kraft, Klaus, 38100 Braunschweig (DE)

(57) **Zusammenfassung**

Reibring und Tragteil einer Scheibenbremse werden mehr und mehr aus unterschiedlichen Materialien, nämlich der Reibring (1) aus Grauguß und das Tragteil (2) aus Aluminium hergestellt. Probleme bereiten hierbei die unterschiedlichen Wärmedehnungen des Reibrings (1) und des Tragteil (2) im Betrieb. Um diese unterschiedlichen Wärmedehnungen ohne ein Lösen des Reibrings (1) von dem Tragteil (2), beispielsweise durch Rißbildung, zu gewährleisten weist bei der erfindungsgemäßen Scheibenbremse der topfförmige Tragteil (2) eine radial nachgiebige Wand auf. Dieses ist nach einem konstruktiven Vorschlag dadurch gewährleistet, daß die Wand des Tragteils (2) durch am Umfang verteilte und axial gerichtete, biegeelastische Laschen (10) gebildet ist, an denen der Reibring (1) mittels der Zapfen (6) befestigt ist.

## Beschreibung

Die Erfindung betrifft eine Bremsscheibe für Scheibenbremsen, insbesondere für Kraftfahrzeuge, mit einem Reibring und einem topfförmigen Tragteil, an dem der Reibring mittels radial nach innen gerichteter Zapfen befestigt ist.

An die Materialeigenschaften eines Reibrings und des topfförmigen Tragteils einer Bremsscheibe für Scheibenbremsen werden unterschiedliche Anforderungen gestellt. So muß der Reibring neben einer hohen Verschleißfestigkeit eine gute Wärmeleitfähigkeit und eine hohe Wärmekapazität aufweisen. Der Topf, der zur Befestigung der Bremsscheibe an der Radnabe dient, muß eine hohe Festigkeit aufweisen. Daneben sollte der Tragteil ein möglichst niedriges Gewicht aufweisen. Es werden daher bereits Bremsscheiben eingesetzt, bei denen der Reibring aus Grußeisen und das Tragteil aus Aluminium gefertigt ist. Für derartige Scheibenbremsen sind in der Patentliteratur unterschiedliche Lösungen für eine Befestigung des Reibrings an dem Tragteil bekannt. Eine der Anforderungen an eine solche Befestigung ist, daß sie möglichst unterschiedliche Wärmedehnungen des Tragteils und des Reibrings aufgrund ihrer unterschiedlichen Wärmeausdehnungskoeffizienten zulassen, ohne daß hierbei die Zentrizität des Reibring auf dem Tragteil verloren geht.

Der Erfindung liegt das Problem zugrunde, eine Bremsscheibe zu schaffen, bei der unterschiedliche Wärmedehnungen des Tragteils und des Reibrings ermöglicht sind, ohne daß die Zentrizität des Reibrings auf dem Tragteil verloren geht und die möglichst einfach herstellbar ist.

Zur Lösung dieses Problems ist die erfindungsgemäße Bremsscheibe dadurch gekennzeichnet, daß eine Wand des topfförmigen Tragteils in Radialrichtung nachgiebig ausgebildet ist und die Zapfen an der Wand verankert sind. Durch die Nachgiebigkeit der Wand des Tragteils können unterschiedliche Wärmedehnungen des Tragteils und des Reibrings durch elastische Verformung der Wand ausgeglichen werden, ohne daß die Gefahr eines Lösens eines Reibrings vom Tragteils, beispielsweise durch Rißbildung besteht.

Vorzugsweise ist die Wand durch am Umfang verteilte und axial gerichtete, biegeelastische Laschen gebildet An diesen sind die Zapfen verankert. Hierdurch ergibt sich eine besonders hohe Elastizität bei einfachem konstruktiven Aufwand.

Bei einer konstruktiven Ausgestaltung der Erfindung sind die Zapfen formschlüssig an den Laschen des Tragteils verankert. Dies kann fertigungstechnisch so erfolgen, daß die Zapfen mit einer Verdickung in eine axial gerichtete und an einer Stirnseite offene Ausnehmung in den Laschen axial eingeschoben und sodann die Ausnehmungen in den Laschen durch verpressen geschlossen werden. Alternativ können die Ausnehmungen in den Laschen auch andere Weise, beispielsweise auch durch schweißen oder schmieden, verschlossen werden.

Die Erfindung wird nachfolgend anhand einer Zeichnung näher erläutert. In dieser zeigen:

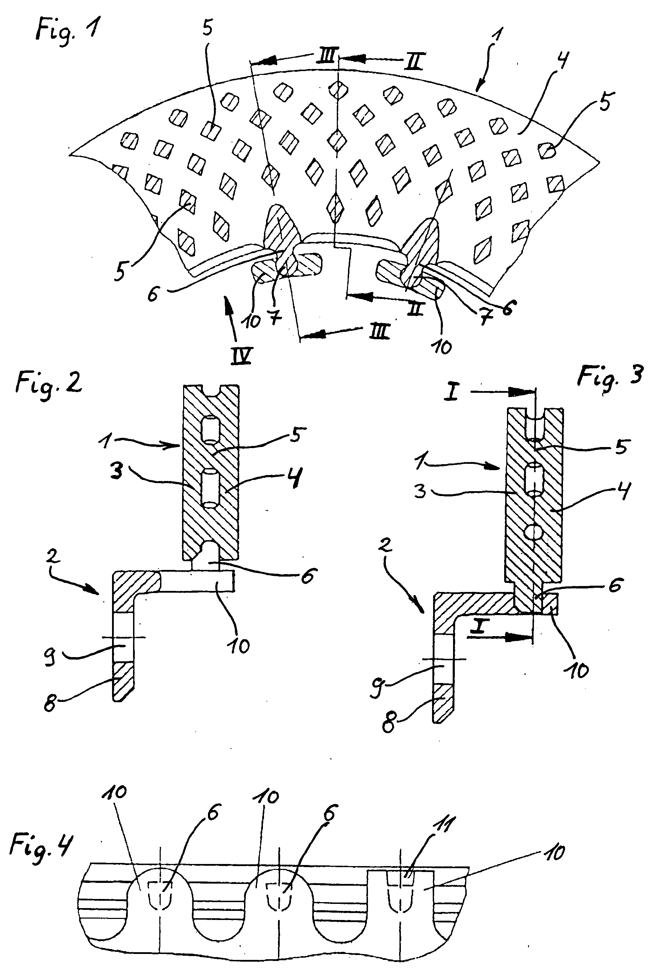

- Fig. 1: einen Vertikalschnitt durch einen Abschnitt einer Bremsscheibe mit den Erfindungsmerkmalen,
- Fig. 2: einen Vertikalschnitt durch die Bremsscheibe gemäß Fig. 1 in der Ebene II-II,
- Fig. 3: einen Vertikalschnitt durch die Bremsscheibe gemäß Fig. 1 in der Ebene III-III,
- Fig. 4: eine abgewickelte Ansicht der Bremsscheibe gemäß Fig. 1 in Blickrichtung IV.

Die dargestellte Bremsscheibe besteht im wesentlichen aus einem Reibring 1 und einem topfförmigen Tragteil 2. Der Reibring 1 ist im vorliegenden Fall als innen belüfteter Reibring ausgebildet und besteht aus zwei Teilreibringen 3 und 4, die durch Stege 5 miteinander verbunden sind.

Der Reibring 1 weist weiterhin radial nach innen gerichtete Zapfen 6 auf, die an ihrem freien Endabschnitt eine Verdickung 7 aufweisen. Der insoweit beschriebene Reibring 1 mit den Teilreibringen 3 und 4, den Stegen 5 und dem Zapfen 6 ist einstückig als Gußteil, beispielsweise aus Grauguß, hergestellt.

Der Tragteil 2 ist topfförmig ausgebildet mit einem Flansch 8, der mit Bohrungen 9 zum Anbringen des Tragteils 1 an einer Radnabe versehen ist. An dem Flansch 8 sind einstückig axial gerichtete Laschen 10 angebracht. Die Laschen 10 liegen in einer gedachten Mantelfläche des topfförmigen Tragteils 2 und ragen zungenförmig hervor. Die Laschen 10 sind am Umfang verteilt. Die Anzahl der Laschen 10 entspricht der Anzahl der Zapfen 6, wobei jedem Zapfen 6 eine Lasche 10 zugeordnet ist.

Wie bereits angedeutet ist das insoweit beschriebene Tragteil 2 ebenfalls einstückig als Gruß oder Schmiedeteil hergestellt. Vorzugsweise ist das Tragteil 2 aus einer geeigneten Aluminiumlegierung hergestellt.

Bevor der Reibring 1 an dem Tragteil 2 befestigt wird, weisen die Laschen 10 axial gerichtete Ausnehmungen 11 auf. Die Ausnehmungen 11 sind an der freien Stirnseite der Laschen 10 offen (linke Laschen 10 in Fig. 4). Der Reibring 1 kann so in Axialrichtung auf das Tragteil 2 aufgeschoben werden, wobei die Verdickungen 7 der Zapfen 6 in die Ausnehmungen 11 der Laschen 10 eingeschoben werden. Schließlich werden die freien Stirnseiten der Laschen 10 verpreßt und so die Ausnehmungen 11 verschlossen. Die Zapfen 6 sind nun formschlüssig in den Laschen 10 verankert.

### BEZUGSZEICHENLISTE

- 1.: Reibring
- 2.: Tragteil
- 3.: Teilreibring
- 4.: Teilreibring
- 5.: Steg
- 6.: Zapfen
- 7.: Verdickung
- 8.: Flansch
- 9.: Bohrung
- 10.: Laschen
- 11.: Ausnehmung

## Patentansprüche

1. Bremsscheibe für eine Scheibenbremse, insbesondere für Kraftfahrzeuge, mit einem Reibring (1) und einem topfförmigen Tragteil (2), an dem der Reibring (1) mittels radial nach innen gerichteter Zapfen(6) befestigt ist, **dadurch gekennzeichnet**, daß eine Wand des topfförmigen Tragteils (2) in Radialrichtung nachgiebig ausgebildet ist und die Zapfen (6) an der Wand verankert sind.

2. Bremsscheibe nach Anspruch 1 dadurch gekennzeichnet, daß die Wand durch am Umfang verteilte und axial gerichtete, biegeelastische Laschen (10) gebildet ist, an denen die Zapfen (6) verankert sind.

3. Bremsscheibe nach Anspruch 1 oder 2, dadurch gekennzeichnet, daß die Zapfen (6) formschlüssig an der Wand bzw. der Laschen (10) verankert sind.

4. Bremsscheibe nach Anspruch 2 oder 3, dadurch gekennzeichnet, daß die Zapfen (6) mit den Laschen (10) verpreßt sind.
